# EUROPÄISCHE PATENTSCHRIFT

(11) **EP 2 865 723 B1**
(45) Veröffentlichungstag und Bekanntmachung des Hinweises auf die Patenterteilung: **14.09.2016**
(21) Anmeldenummer: 13005053.7
(22) Anmeldetag: 23.10.2013
(51) Int. Cl.: C09D 167/08, C09D 191/06

(54) **Korrosionsschutzmittel zur Kaltapplikation**
Corrosion protection agent for cold application
Moyen de protection contre la corrosion pour application à froid

(43) Veröffentlichungstag der Anmeldung: 29.04.2015
(73) Patentinhaber: Fuchs Europe Schmierstoffe GmbH, 68169 Mannheim (DE)
(72) Erfinder: Losch, Achim, 67593 Westhofen (DE); Ebner, Ruven, 67071 Ludwigshafen (DE)
(74) Vertreter: Drobnik, Stefanie

(56) Entgegenhaltungen:
- DE-A1- 4 240 810
- DE-A1-102005 059 613
- DE-A1-102006 026 742
- KR-A- 20090 000 295
- US-A1- 2005 026 803
- US-A1- 2012 015 852

## Beschreibung

Die Erfindung betrifft ein Korrosionsschutzmittel zur Kaltapplikation und dessen Verwendung zur Hohlraumkonservierung.

Aus dem Stand der Technik ist bekannt, dass Karosseriehohlräume und das Fahrgestell von Kraftfahrzeugen, die im Verlauf des Fahrzeugbetriebs Wasser oder feuchter und salzhaltiger Umgebungsluft ausgesetzt sind, mit einem Korrosionsschutzmittel vor Korrosion zu schützen sind. Hohlräume im Kraftfahrzeug, die vor Korrosion zu schützen sind, liegen beispielsweise in den Schwellern, den Säulen, den Türen und bei den Kotflügeln bzw. Radgehäusen vor.

Zur Hohlraumversiegelung wird ein Hohlraumkonservierungsmittel mit einer guten Kriechfähigkeit in die Hohlräume eingebracht, das auch in Ritzen und Falze eindringt, um über Teile oder über die gesamte Hohlraumoberfläche eine dauerhaft wasserabweisende Schutzschicht auszubilden. Dabei wird das flüssige Konservierungsmittel beispielsweise mittels einer durch eine Ablauföffnung eingeführte Sprühlanze oder spezielle Sprühdüsen in gesonderten Öffnungen in den Hohlraum eingesprüht und in die Ritzen und Falze kriechen gelassen. Nach einer gewissen Zelt verfestigt sich das flüssige Konservierungsmittel.

Dabei ist im Herstellungsprozess von Kraftfahrzeugen eine schnelle Verfestigung erforderlich, so dass während der auf die Hohlraumversiegelung folgenden Prozessschritte kein Hohlraumkonservierungsmittel austritt, das einerseits Verschmutzungen am Bauteil und damit aufwändige Reinigungsarbeiten verursachen kann, die etwa vor einer Lackierung des Bauteils oder der Ausgabe des fertigen Fahrzeugs durchzuführen sind. Andererseits kann austretendes Hohlraumkonservierungsmittel zu Verschmutzungen des Hallenbodens führen, die neben einem erhöhten Reinigungsaufwand mit erhöhter Unfallgefahr für die Werker verbunden sind.

Ferner soll der durch das ausgehärtete Konservierungsmittel gebildete Schutzfilm eine gewisse Flexibilität und Fließfähigkeit aufweisen, um Bauteilbewegungen oder Volumenänderungen des Hohlraums infolge temperaturbedingter Wärmeausdehnungen auszugleichen.

DE 10 2005 059 613 A1 offenbart ein bei Raumtemperatur applizierbares und trocknendes Beschichtungsmaterial für Substrate, die einem Kalt- oder Warmumformungsprozess unterzogen werden sollen. Das Beschichtungsmaterial setzt sich aus 0,5 und 90 Gew.-% Schmiermittel (natürliche und synthetische Wachse und Öle), bis 95 Gew.-% Bindemittel (Polyester, Epoxidharze), 0 bis 90 Gew.-% Pigmente oder Füllstoffe zusammen und kann eine unbestimmte Menge an Korrosionsinhibitoren (basische Sulfonate von Alkali- und Erdalkalimetallen) umfassen.

Aus US 2012/0015852 A1 ist ein Nanofluid bekannt, das als Bohr- und Endbearbeitungsmedium eingesetzt wird. Das Medium enthält ein Basisfluid, das ein nichtwässriges Fluid sein kann, sowie Nanopartikel, die auf verschiedene Weise funktionalisiert sein können oder gekapselte Additive (Wachs- und Asphalt-Inhibitoren, Schieferstabilisatoren, Korrosionsinhibitoren, Penetrationsgeschwindigkeitsbeschleuniger, Zunderinhibitoren, Hydratinhibitoren, Biozide, Schmiermittel...) enthalten können.

KR 2009 0000295 offenbart ein Beschichtungsmaterial für Stahl zur Unterdrückung der Verzunderung bei höheren Temperaturen. Zudem soll das Beschichtungsmaterial, das nach Applikation bei 250-270°C ausgehärtet wird, das Schweißen nach dem Erhitzen ermöglichen. Dieses Beschichtungsmaterial setzt sich aus 20-50 Gew.% Lösungsmittel, 20-50 Gew.-% Bindemittel, 10-20 Gew.-% Metallpigment, 10-20 Gew.-% anorganischer Festschmierstoff und 3-8 Gew.-% organischer Festschmierstoff (Wachse), sowie 5 Gew.-% Korrosionsschutzmittel zusammen.

US 2005/0026803 A1 offenbart eine Seifenlauge/Schaum bildende Zusammensetzung, die wirksame Mengen eines polymeren Seifenlaugenstabilisators, eines detergierenden Tensids und die "Balance Carrier" und andere Zusätze enthält. Die Zusätze können aus diversen bekannten Additiven ausgewählt werden.

DE 10 2006 026 742 A1 beschreibt ein Hochleistungs-Industrie-Getriebeöl, das 90 bis 98 Gew.-% Basisfluid (Polyalphaolefin/Polyol-Ester-Grundstoff oder ein Solvent Neutral-Raffinat) und 2 bis 10 Gew.-% Additivpaket umfasst. Das Additivpaket weist Korrosionsinhibitoren, Antioxidatien, Reibungsminderer (darunter Polyester), Dispergiermittel (darunter Sulfonate bzw. überbasisches Calciumsulfonat, Salicylate), Hochdruck-Zusätze, Schauminhibitoren und Pourpoint-Erniedriger aufweist.

Eine Verfahrensvariante zur Hohlraumkonservierung nützt unverdünntes Heißwachs, so genanntes Flutwachs, das heiß im flüssigen Zustand in das vorgewärmte Bauteil bzw. die vorgewärmte Karosserie eingepumpt wird. Nach Auslaufen des überschüssigen Wachses verbleibt ein erstarrter Restfilm von ca. 25 µm Dicke.

Eine andere Verfestigung wird mit Hohlraumkonservierungsmitteln erreicht, die zur Applikation mit einem flüchtigen Lösungsmittel verdünnt werden, das nach der Aufbringung verdunstet. Hierbei ergibt sich aber das Problem der hierfür erforderlichen Arbeitschutzmaßnahmen und Abluftbehandlung, um Emissionen des Lösungsmittels in die Umwelt zu verhindern.

DE 42 40 810 A1 beschreibt ein Korrosionsschutz-Beschichtungsmittel, das bei Raumtemperatur applizierbar ist und auf Wachsen, wachsartigen Verbindungen, trockenen Ölen oder Alkydharzen, Lösungsmitteln, nicht flüchtigen Ölen, Verlaufshilfsmitteln und Korrosionsinhibitoren basiert. Zur Verbesserung des Ablaufverhaltens wird ein Gemisch aus 0,1-15 Gew.-% Polymerpulver und 0,1-15 Gew.-% Weichmacher hinzugefügt, das bei erhöhter Temperatur zur Verfestigung führt. Es werden zwei Grundzusammensetzungen angeführt: Die erste Zusammensetzung weist 23,6 % Kohlenwasserstoffharz aus Vinyltoluol/Styrol/Inden, 4,0 % oxidiertes Petrolatum, 4,0 % Mischung aus Mikro-Paraffinwachs- und Gatsch, 1,1 % saures Alkyl-aryl-Polyglykoletherphosphat, 2,2 % Mischung von Fettsäurealkanolamiden, 33,1 % Testbenzin und 8,0 % überbasisches Calciumsulfonat in Mineralöl, 3,0 % Calciumsulfonat-Calciumcarbonat-Komplex mit einem Zusatz Testbenzin, 9,4 % technisches Weißöl, 6,0 % gefällte Kreide, 1,7 % Magnesium-Montmorillonit, 3,0 % Testbenzin sowie 0,9 % n-Propanol auf.

Bei wasserverdünnten Wachsdispersionen als Hohlraumkonservierungsmittel verdunstet nach der Applikation (in der Regel ohne Erwärmung der Bauteile) das Wasser, so dass ein Wachsfilm zurückbleibt. Durch die notwendige Gegenwart von Emulgatoren ist der Korrosionsschutz solcher wasserbasierter Systeme geringer als der Korrosionsschutz emulgatorfreier Korrosionsschutzmittel. Zudem neigen solche Systeme zur Verkeimung, was durch aufwändige Additivnachstellungen vermieden werden muss.

Neuere Hohlraumkonservierungsmittel, so genannte Full-Solid-Wachse, weisen keine Verdünnung durch Lösemittel oder Wasser auf Sie enthalten in einer Ausführungsvariante wärmeaktive Additive, bei denen es sich z. B. um dlsperglerte Partikel aus festen Polymeren oder Wachsen mit einem niedrigen Erweichungspunkt handelt. Nach dem Einsprühen und Verteilen in den Hohlraum wird das Bauteil erhöhten Temperaturbedingungen ausgesetzt, wodurch die wärmeaktiven Additive ganz oder teilweise in Lösung gehen. Nach dem Erkalten geliert das Hohlraumkonservierungsmittel, so dass es während der nachfolgenden Prozessschritte nicht mehr ausfließen kann, während die eigentliche Aushärtung durch eine spätere chemische Vernetzungsreaktion stattfindet.

Die JP 2009 208 015 beschreibt eine Korrosionsschutzbehandlung für eine Karosserie, bei der die Applikation eines Wachses, das ein solches Dropstop-Additiv, ein thixotropes Mittel des Erwärmungstyps, enthält, auf einen korrosionsschutzbehandelten Bereich der Karosserie erfolgt, wobei das durch Erhitzen verflüssigte Wachs in die Engstelle der Karosserie penetrieren gelassen, eingedickt und abkühlen gelassen wird. Weiteres Erhitzen des Wachses führt dann nicht mehr zu einer Viskositätsverringerung, so dass das Wachs in der Engstelle verbleibt.

Eine Zusammensetzung für ein Korrosionsschutzwachs ist in der DE 10 2006 056 688 A1 beschrieben. Die Zusammensetzung umfasst etwa 10 bis etwa 20 Gew.-% eines naphthenhaltigen Mineralöls, etwa 15 bis etwa 25 Gew.-% eines Wachses, das mit einem oxidierten Mineralölwachs und einem mikrokristallinen Wachs in einem Gewichtsverhältnis von etwa 10:5 bis etwa 15:10 vermischt ist, etwa 45 bis etwa 65 Gew.-% eines Korrosionsschutzadditives, das mit einem Kalziummineralölsulfonat und einem Bariumdinonylnaphthalensulfonat in einem Gewichtsverhältnis von etwa 10:35 bis etwa 20:45 vermischt ist, etwa 10 bis etwa 30 Gew.-% eines Alkydharzes, und etwa 0,5 bis etwa 2 Gew.-% wenigstens eines Additivs, das aus der Gruppe ausgewählt ist, die aus einem Antischaumagens, einem Trocknungsagens, einem oberflächenaktiven Mittel und einem Antikratzbeschlchtungsmaterlal besteht.

Allerdings ist bei der Hohlraumversiegelung mit Flutwachs und des zurzeit am Markt verfügbaren Full-Solid-Wachs der zusätzliche Schritt des Aufwärmens und eine für das entsprechende Bauteil oder Fahrzeug geeignete Heizvorrichtung mit dem entsprechenden Platz- und Energiebedarf erforderlich.

Ausgehend von diesem Stand der Technik liegt der vorliegenden Erfindung die Aufgabe zugrunde, ein Korrosionsschutzmittel zur Hohlraumkonservierung eines Bauteils bereitzustellen, das keine flüchtigen organischen Verbindungen (VOC) enthält und keine energieaufwändige Erwärmung zur Applikation oder Verfestigung erfordert, und somit auch entsprechende je nach Bauteilgröße platzintensive Heizvorrichtungen entfallen können.

Diese Aufgabe wird durch ein Korrosionsschutzmittel mit den Merkmalen des unabhängigen Anspruchs 1 gelöst.

Bevorzugte Ausführungsformen werden durch die Unteransprüche beschrieben.

Ferner wird eine Verwendung des Korrosionsschutzmittels zur Hohlraumkonservierung mit den Merkmalen des unabhängigen Anspruchs 8 offenbart.

Ein erfindungsgemäßes Korrosionsschutzmittel zur Hohlraumkonservierung, das ohne Erwärmung applizierbar und verfestigbar ist und das keine flüchtigen organischen Verbindungen enthält, weist eine Zusammensetzung aus
25 bis 40 Gew.-% Basisfluid,
19 bis 25 Gew.-% Polyesterharz,
7 bis 11 Gew.-% Wachsmischung,
12,0 bis 18 Gew.-% Korrosionsschutzadditiv,
15 bis 25 Gew.-% Füller und
0,4 bis 0,6 Gew.-% zumindest eines Additivs
   auf.

Das Basisfluid ist dabei aus einer Gruppe ausgewählt, die VOC-freie Lösungsmittel, Mineralöle, Ester und Kombinationen davon umfasst, während die Wachsmischung aus zumindest zwei sich hinsichtlich ihres Erstarrungspunkts unterscheidender fester Paraffine besteht. Das Korrosionsschutzadditiv ist aus einer Gruppe, die Alkali- und Erdalkalisulfonate, Salicylate, Wollfette und Kombinationen davon umfasst. Das Additiv ist oder die Additive sind aus einer Gruppe ausgewählt, die ein Hautverhinderungsmittel, ein Sikkativ und ein Farbstoffadditiv und gegebenenfalls noch weitere, in Konservierungsschutzmitteln übliche Additive umfasst.

In einer Ausführungsform kann das Korrosionsschutzadditiv Calciumsulfonat sein.

Die verwendeten Ester können etwa Mono, Di- und Hydroyxyester oder Kombinationen davon sein, die alle jeweils voll gesättigt, einfach oder mehrfach ungesättigt sein können.

Bevorzugt Ist das Lösungsmittel des Basisfluids nicht nur VOC-frei sondern auch aromatenfrei. Die 25 bis 40 Gew.-% Basisfluid können sich aus 8 bis 12 Gew.-% eines VOC- und aromatenfreien Lösungsmittels und 17 bis 28 Gew.-% eines paraffinischen Mineralöls zusammensetzen. Die 7 bis 11 Gew.-% Wachsmischung können sich aus 2 bis 3 Gew.-% eines ersten Wachses mit einem Erstarrungspunkt im Bereich von 60 bis 65 °C, 4 bis 6 Gew.-% eines zweiten Wachses mit einem Erstarrungspunkt im Bereich von 35 bis 55 °C und 1 bis 2 Gew.-% eines dritten Wachses mit einem Erstarrungspunkt im Bereich von 76 bis 82 °C zusammensetzen.

Die Viskosität des erfindungsgemäßen Korrosionsschutzmittels lässt sich durch den Anteil des Basisfluids an der Zusammensetzung und/oder durch Variation der Anteile des Lösungsmittels und des Mineralöls an dem Basisfluid einstellen.

Eine bevorzugte Zusammensetzung des erfindungsgemäßen Korrosionsschutzmittels für ein optimiertes rheologisches Verhalten mit einer Viskosität von 260 mPas bei 23 °C nach Scherung bei 300 U/min weist
9,89 Gew.-% VOC- und aromatenfreies Lösungsmittel,
23,6 Gew.-% paraffinisches Mineralöl,
22,0 Gew.-% Polyesterharz,
2,5 Gew.-% erstes Wachs,
5,0 Gew.-% zweites Wachs,
1,5 Gew.-% drittes Wachs,
15,0 Gew.-% überbasisches Calciumsulfonat,
20,0 Gew.-% Füller,
0,4 Gew.-% Hautverhinderungsmittel,
0,1 Gew.-% Sikkativ und
0,01 Gew.-% Farbstoffadditiv
   auf.

Damit das Korrosionsschutzmittel die zur Kaltapplikation gewünschten rheologischen Eigenschaften aufweist, ist es vorteilhaft, wenn als VOC- und aromatenfreies Lösungsmittel ein aliphatisches Kohlenwasserstoffgemisch mit einem Siedebeginn bei zumindest 275 °C und einem Siedeende bei maximal 320 °C gewählt wird. Alternativ oder zusätzlich kann das paraffinische Mineralöl eine Dichte bei 15 °C im Bereich von 845 bis 865 kgm⁻³ und eine kinematische Viskosität bei 40°C von 14 bis 17 cSt aufweisen. Als Polyesterharz kann ein festkörperreiches, fettes lösungsmittelfreies Alkyd mit einem Fettsäuregehalt von 84 % eingesetzt werden und als Füller ein Calciumsulfat mit einer durchschnittlichen Korngröße von 3 µm. Ein phenol- und oximfreies in Fettsäureester gelöstes Hydroxylamin, erhältlich von OMG Borchers GmbH unter dem Handelsnamen Ascinin® Anti Skin 0444, kann als Additiv zur Hautverhinderung eingesetzt werden. Das Sikkativ als weiteres Additiv kann ein metallbasierter Katalysator sein, beispielsweise Borchi® OXY-Coat von OMG Borchers GmbH. Das Farbstoffadditiv kann ein UV-Adsorbens, bevorzugt ein hochmolekularer fluoreszierender Weißmacher sein.

Ein erfindungsgemäß zusammengesetztes Korrosionsschutzmittel kann zur Hohlraumkonservierung eingesetzt werden, wobei das Korrosionsschutzmittel ohne Wärmeeinwirkung mit einer Schichtdicke in einem Bereich von 25 bis 50 µm appliziert wird, und bevorzugt mittels Sprühen appliziert wird.

Weitere Ausführungsformen, sowie einige der Vorteile, die mit diesen und weiteren Ausführungsformen verbunden sind, werden durch die nachfolgende ausführliche Beschrelbung deutlich und besser verständlich. Unterstützend hierbei ist auch der Bezug auf die Figuren in der Beschreibung.
**Fig. 1** zeigt die Fließkurve, Schubspannung τ und Viskosität η in Abhängigkeit der Scherrate *γ̇* für ein erfindungsgemäßes Korrosionsschutzmittel in der bevorzugten Ausführungsform mit mittlerer Viskosität,
**Fig. 2** zeigt die Fließkurve, Schubspannung τ und Viskosität η in Abhängigkeit der Scherrate *γ̇* für ein erfindungsgemäßes Korrosionsschutzmittel mit geringerer Viskosität,
**Fig. 3** zeigt die Fließkurve, Schubspannung τ und Viskosität η in Abhängigkeit der Scherrate *γ̇* für ein erfindungsgemäßes Korrosionsschutzmittel mit höherer Viskosität,
**Fig. 4** zeigt einen beispielhaft angenommenen Vergleich der Zusammensetzung verschiedener Korrosionsschutzmittel.

Eine Erfindung betrifft eine wachsartige und VOC-freie Zusammensetzung für ein Korrosionsschutzmittel auf Basis eines niedrigviskosen Basisfluids, das sich besonders für die Konservierung von Hohlräumen für automobile Anwendungen im Sprühverfahren eignet. Das erfindungsgemäße Korrosionsschutzmittel gehört zur Familie der Full-Solid-Wachse und enthält kein aromatisches Lösungsmittel oder Wasser, ist frei von flüchtlgen organischen Verbindungen (VOC) und hat keinen unangenehmen Geruch. Die Hohlraumkonservierung mit dem erfindungsgemäßen Full-Solid-Wachs bietet eine sehr lange Schutzdauer vor Korrosion.

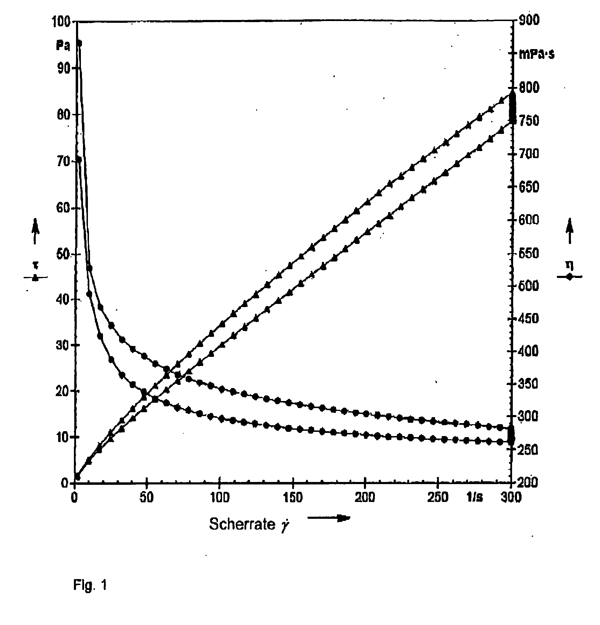

Ein erfindungsgemäß zusammengesetztes Korrosionsschutzmittel weist eine optimierte Rheologie auf; Fließbilder für verschiedene Zusammensetzungen sind in Fig. 1 bis 3 gezeigt. Das erfindungsgemäße Korrosionsschutzmittel weist ein hervorragendes Kriechvermögen bei gleichzeitig begrenzter Ablaufneigung auf. Nach Scherung, beispielsweise durch Rühren, weist das Korrosionsschutzwachs eine niedrige, definierte Viskosität η im Beispiel aus **Fig. 1** von 150 bis 300 mPas auf, wodurch es auch bei Raumtemperatur gut mit einer herkömmlichen Sprühausrüstung appliziert werden kann. Kommt das Korrosionsschutzmittel nach der Applikation als Film auf dem Bauteil zur Ruhe, nimmt die Viskosität η wieder deutlich zu (im Beispiel aus **Fig. 1** auf 700 bis 900 mPas).

Die ausgeprägte Ablaufhemmung wird durch die eingesetzte Wachsmischung und das überbasische Calciumsulfonat erreicht und auch durch die Eigenthixotropie des Füllermaterials Calciumsulfat unterstützt. Der sich bildende Schutzfilm ist grifffest und besitzt eine gute Haftung auf verschiedenen Untergründen wie Stahl, Zink, phosphatierten oder KTLbeschichteten Oberflächen. Eine dauerhafte Verfestigung des applizierten Wachsfilms erfolgt bei Raumtemperatur und wird durch oxidative Polymerisation des Polyesterharzes erreicht. Eine kurzzeitige Temperaturbeaufschlagung mit unmittelbar anschließender Abkühlung auf Raumtemperatur beeinträchtigt die Ablaufhemmung des Schutzfilms nicht. Der getrocknete durchsichtige bis weißlich gefärbte Schutzfilm ist fest, aber dennoch flexibel.

Das in **Fig. 1** gezeigte rheologische Verhalten gehört zu einer bevorzugten Ausführungsform der erfindungsgemäßen Zusammensetzung. Diese weist 9,89 Gew.-% VOC- und aromatenfreies Lösungsmittel, 23,6 Gew.-% paraffinisches Mineralöl, 22,0 Gew.-% Polyesterharz, 2,5 Gew.-% erstes Wachs, 5,0 Gew.-% zweites Wachs, 1,5 Gew.-% drittes Wachs, 15,0 Gew.-% Calciumsulfonat, 20,0 Gew.-% Füller, 0,4 Gew.-% Hautverhinderungsmittel, 0,1 Gew.-% Sikkativ und 0,01 Gew.-% Farbstoffadditiv auf.

Diese Zusammensetzung weist eine beige Farbe und eine Dichte von 1060 kgm⁻³ bei 15 °C (nach DIN 51 757) auf. Der Flammpunkt (bestimmt nach DIN EN ISO 22 719) liegt bei 135 °C. Die Viskosität bei 23 °C nach Scherung bei 300 U/min, ermittelt nach DIN EN 53019-1/DIN EN ISO 3215, liegt bei 260 mPas. Die Auslaufzeit bei 23 °C wurde gemäß DIN EN ISO 2431 mit einem 5 mm ISO Auslaufbecher zu 100 s und mit einem 4 mm DIN Auslaufbecher zu 75 s bestimmt.

Ein Blech beschichtet mit einem 100 µm getrockneten Film aus dieser Zusammensetzung besteht eine Dornbiegeprüfung bei -40 °C zur Bestimmung der Niedertemperaturstabilität und hat eine Wärmestabilität von über 120 °C. Auf zwei verschiedenen Substraten, unbeschichtetem und feuerverzinktem Kaltfeinblech für eine automobile Rohkarosse, wurden jeweils mit einem 30 µm Trockenfilm eine Kondenswasserprüfung nach DIN EN ISO 6270-2/CH, Korrosionsschutz-Wechselteste nach VDA 621-415 und VW PV16.21 sowie Salzsprühtests nach DIN EN ISO 9227 durchgeführt.

Die Kondenswasserprüfung ergab für beide Substrate mehr als 720 h, bei den Korrosionsschutz-Wechseltesten mehr als 10 (VDA 621-415) bzw. mehr als 30 Zyklen (VW PV 16.21) und im Salzsprühtest erreichen beide Substrate mehr als 720 h ohne Auftreten von Korrosion.

In der Anwendung des Korrosionsschutzmittels als Schutzfilm mit einer Schichtdicke von 25 bis 50 µm wird eine Rostunterwanderung auch bei einer Verletzung des Schutzfilms wirkungsvoll unterbunden. Eine Auftragung des Korrosionsschutzmittels in Schichtdicken über 50 µm hat allerdings eine stark verlangsamte Durchtrocknung zur Folge.

Bei dem aromatenfreien Lösungsmittel handelt es sich bevorzugt um ein aliphatisches Kohlenwasserstoffgemisch mit einem Siedebeginn bei zumindest 275°C und einem Siedeende bei maximal 320°C. Ein solches aromatenfreie Lösungsmittel ist beispielsweise unter dem Handelsnamen Exxsol™ D 140 aus der Produktion der ExxonMobil Chemical von Caldic Deutschland Chemie B.V., Düsseldorf, Deutschland, erhältlich. Die Bestimmung des Siedebereichs wird nach ASTM D 86-99 durchgeführt. Der Flammpunkt liegt bei mindestens 129°C (nach ASTM D 93), der Aromatengehalt übersteigt nicht 1,5 Gew.-%, so dass das Lösungsmittel als aromatenfrei betrachtet wird. Die nach ASTM D 445 bestimmte Viskosität liegt bei maximal 5,0 mm²s⁻¹.

Als paraffinisches Mineralöl, das mittels Lösungsmittel raffiniert ist, kann beispielsweise 85 Neutral Solvent von Total, Puteaux, Frankreich, eingesetzt werden, das eine Dichte bei 15 °C im Bereich von 845 bis 865 kgm⁻³ (nach ISO 12185), eine kinematische Viskosität bei 40 °C von 14 bis 17 cSt (nach ISO 3104) und einen Viskositätsindex (nach ISO 2909) von zumindest 100 aufweist. Der Flammpunkt (nach ISO 2592) liegt bei zumindest 180 °C und der Pourpoint (nach ISO 3016) bei unter -12 °C.

Das Polyesterharz der erfindungsgemäßen Zusammensetzung kann ein High-Solid-Bindemittel sein, bei dem es sich um ein festkörperreiches, fettes lösungsmittelfreies Alkyd handeln kann, das einen linolsäurereichen Fettsäuregehalt von 84 % und einen Säurewert (nach ISO 2114) von unter 15 mg KOH/g aufweist. Ein solches Produkt ist von Cray Valley, Paris, Frankreich, unter dem Namen Synolac 4200 erhältlich. Die Viskosität bei 25 °C unter Scherung mit 10.000 s⁻¹ (CAP1000, C3, ISO 3219) liegt zwischen 600 und 1000 mPas und die Dichte (nach ISO 2811) bei 0,97 kg/l.

Die Wachsmischung kann als erstes Wachs mit einem Erstarrungspunkt im Bereich von 60 bis 65 °C beispielsweise SASOL WAX® 6072 von Sasol Wax GmbH, Hamburg, Deutschland, aufweisen, dessen kinematische Viskosität bei 100 °C 6,0 bis 8,0 mm²s⁻¹ (nach ASTM D 7042) beträgt. Als zweites Wachs mit einem Erstarrungspunkt im Bereich von 35 bis 55 °C kann SASOL WAX® 3099, ebenfalls von Sasol Wax GmbH, Hamburg, Deutschland, eingesetzt werden, dessen kinematische Viskosität bei 100 °C bei 15,0 bis 25,0 mm²s⁻¹ (nach ASTM D 7042) liegt. Das dritte Wachs mit einem Erstarrungspunkt im Bereich von 76 bis 82 °C kann SASOL WAX® 3279 sein, das auch von Sasol Wax GmbH, Hamburg, Deutschland, erhältlich ist.

Als Lieferant für Calciumsulfonat eignet sich beispielsweise ein überbasisches Komplexsulfonat. (Komplex aus Alkylarylsulfonat und Calciumcarbonat. Ein solches Produkt ist von PCAS, Frankreich unter der Bezeichnung ARCOT 645 erhältlich. Typischerweise besitzt dieses eine Basenzahl von 160 mg KOH/g (ASTM D 2896) und hat einen Verdampfungsrückstand nach DIN EN ISO 3251 von mindestens 97,5 %.

Das als Füller mit Eigenthixotropie eingesetzte Calciumsulfat weist bevorzugt eine durchschnittliche Korngröße von 3 µm mit einer maximalen Korngröße von 7 µm auf. Dabei kann es sich um Trefil 1313-600 Anhydrit handeln, das von Quarzwerke GmbH, Frechen, Deutschland, angeboten wird. Die Verunreinigungen des Calciumsulfats umfassen MgO, Al₂O₃, Fe₂O₃ und SiO₂ und übersteigen zusammen nicht 0,6 Gew.-% bezogen auf das Gewicht des Füllers. Dessen Dichte liegt bei 3,0 kg/l (nach DIN EN ISO 787-10) und erweist eine spezifische Oberfläche von 1,9 m²/g (DIN ISO 9277) und eine Ölzahl von 19 g/100 g (DIN ISO 787-5) auf.

Als Hautverhinderungsmittel kann mit Ascinin^{®} Anti Skin 0444 von OMG Borchers GmbH, Langenfeld, Deutschland, ein phenol- und oximfreies Hautverhinderungsmittel eingesetzt werden, das zumindest ein Hydroxylamin umfasst und in einem hochsiedenden Fettsäureester gelöst vorliegt. Die Dichte liegt zwischen 0,86 und 0,90 g/cm³ bei 20 °C (nach DIN 51757(A)-1994) und die Viskosität bei 20 °C (nach ISO 3219(A)-1994) bei maximal 45 mPas. Die Hautbildung an der Oberfläche des Films entsteht durch Oxidation, wenn Luftsauerstoff in die Oberfläche des Films eindringt. Das Hautverhinderungsmittel steuert die Hautbildung, da eine dünne Haut durchaus erwünscht ist, um das Abfließen zu verringern.

Die Trocknung bzw. Aushärtung des Films erfolgt durch Oxidation. Der oxidative Trocknungsmechanismus erfordert das Eindringen von Sauerstoff in die Tiefe des Films. Dazu werden Sikkative eingesetzt, die Luftsauerstoff von der Oberfläche in den Kern des Films transportieren. Art und Menge der Sikkative steuern den Aushärtungsprozess.

Das Sikkativ kann ein metallbasierter Katalysator sein, bevorzugt wird Borchi^{®} OXY-Coat von OMG Borchers GmbH, Langenfeld, Deutschland eingesetzt, bei dem es sich um einen kobaltfreien Eisenkomplex handelt, der in Propan-1,2-diol gelöst vorliegt. Der Metallgehalt (nach ICP) liegt bei 870 bis 930 ppm, die Viskosität bei 20 °C liegt unter 200 nPas (nach ISO 3219(A)-1994) und die Dichte bei 20 °C (nach DIN 51757(A)-1994) bei ca. 1,04 g/cm³.

Bei dem Farbstoffadditiv handelt es sich bevorzugt um ein UV-Adsorbens, das zur Qualitätskontrolle, beispielsweise zur Überprüfung der Schichtdicke, genutzt werden kann. Als UV-Adsorbens kann z. B. ein hochmolekularer fluoreszierender Weißmacher der Thiophendiylbenzoxazol-Klasse, beispielsweise Tinopal® OB von BASF; gewählt werden.

Fig. 1 zeigt die Fließkurven dieser bevorzugten Zusammensetzung. In dem Diagramm sind sowohl Schubspannung τ (linke Ordinatenachse) als auch Viskosität η (rechte Ordinatenachse) über der Scherrate *γ̇* aufgetragen. Die Ruheviskosität liegt im Bereich von knapp 700 bis 900 mPas, nach Scherung stellt sich oberhalb ca. 200 s⁻¹ die niedrige definierte Viskosität von 250-300 mPas ein.

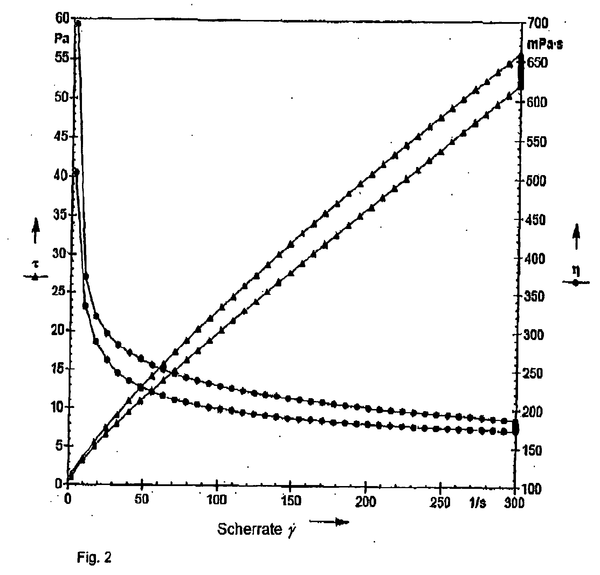

Fig. 2 zeigt eine Ausführungsform des erfindungsgemäßen Korrosionsschutzmittels mit einer verringerten Viskosität im Ruhezustand zwischen ca. 500 und 700 mPas. Die sich bei dieser Zusammensetzung einstellende verringerte definierte Viskosität nach Scherung liegt bei 150 bis 200 mPas. Diese Einstellung der Viskosität wurde durch eine Veränderung des Basisfluides erreicht, das hier ohne paraffinisches Mineralöl nur aus dem VOC- und aromatenfreien Lösungsmittel Exxsol™ D140 besteht.

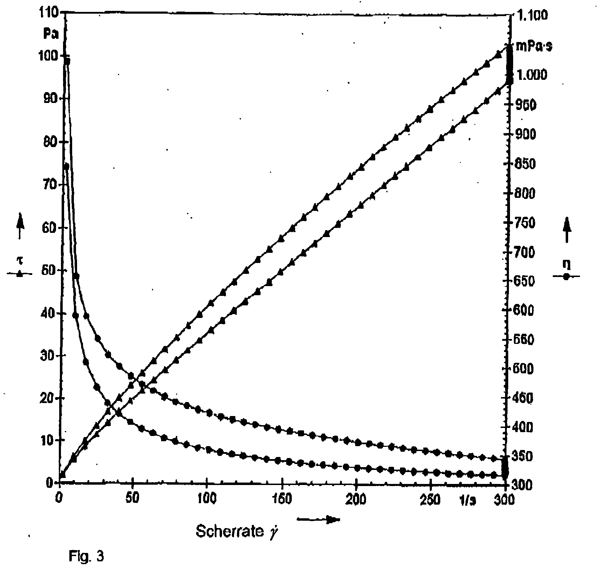

**Fig. 3** zeigt eine Ausführungsform des erfindungsgemäßen Korrosionsschutzmittels mit erhöhter Viskosität im Ruhezustand zwischen ca. 850 und 1050 mPas. Die sich bei dieser Zusammensetzung einstellende verringerte definierte Viskosität nach Scherung liegt bei 300 bis 350 mPas. Diese Einstellung der Viskosität wurde ebenfalls durch eine Veränderung des Basisfluides erreicht, das hier ohne VOC- und aromatenfreien Lösungsmittel nur aus dem paraffinischen Mineralöl 85 Neutral Solvent besteht.

Aufgrund der niedrigen definierten Viskosität bei Raumtemperatur kann das erfindungsgemäße Korrosionsschutzmittel mit handelsüblichen Sprühsystemen appliziert werden. Für eine Nachbearbeitung beispielsweise ist aber auch die Aufbringung mittels Pinsel denkbar. Das erfindungsgemäße Korrosionsschutzmittel kann mit einem lösungsmittelbasierten Reinigungsmedium entfernt werden.

Tritt vor Applikation während Lagerung oder Transport ein Eindicken des Korrosionsschutzmittels auf oder sedimentieren Thixotropiebildner (Wachsmischung, Calciumsulfonat oder Füller Calciumsulfat), so kann das Korrosionsschutzmittel einfach durch Rühren wieder sprühfähig gemacht werden.

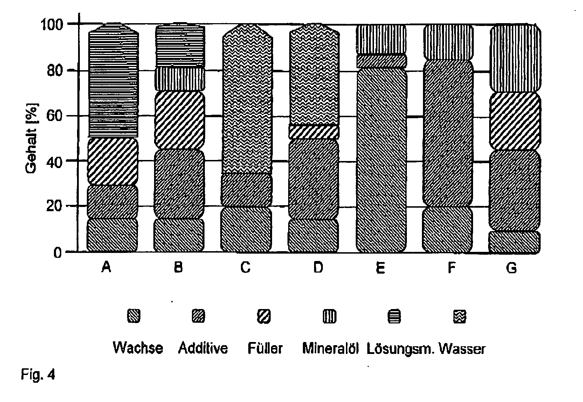

**Fig. 4** zeigt das erfindungsgemäße Korrosionsschutzmittel mit einer beispielhaften Zusammensetzung ganz rechts im Diagramm, gekennzeichnet durch den Buchstaben G mit 9 % Wachsmischung, 38 % unter Additiven zusammengefasste Polyesterharz, Calciumsulfonat sowie Hautverhinderungsmittel, Sikkativ und Farbstoff, 20 % Füller und 33 % Basisfluid (indiziert als Mineralöl). Im Vergleich dazu besteht das herkömmliche System A auf Lösungsmittelbasis, das ca. 50 % der Zusammensetzung ausmacht, aus 15 % Wachsen, 15 % Additiven und ca. 20 % Füller. Ein High-Solids-System B umfasst etwa 15 % Wachse, 30 % Additive, 25 % Füller, 10 % Mineralöl und Rest Lösungsmittel. Ein wasserbasiertes Low-Tech-System C enthält neben ca. 65 % Wasser knapp 20 % Wachse und 15 % Additive, während ein wasserbasiertes High-Tech-System D 15 % Wachse, 36 % Additive, 5 % Füller und 44 % Wasser aufweist. Ein Flutwachs E umfasst gute 8 0% Wachse, 5 % Additive und knapp 15 % Mineralöl. Ein Full-Solid-Wachs F aus dem Stand der Technik (DE 10 2006 056 688 A1) weist eine Zusammensetzung aus 20 % Wachsmischung, 65 % Additive, die sich hier aus Calciumsulfonat, Bariumsulfonat, Alkydharz und anderen Additiven (Antischaum-, Trocknungsagens, oberflächenaktives Mittel, Kratzbeschichtungsmaterial) zusammensetzen, und 15 % Mineralöl auf.

Während die lösungsmittelbasierten Systeme A und B schnell durch Verflüchtigung des Lösungsmittels verfestigen, erfordern die wasserbasierten Systeme C und D das Abdampfen der wässrigen Komponenten, um die Aushärtung des Schutzfilms zu erreichen, wozu eine Wärmebeaufschlagung erforderlich ist. Auch das Flutwachs E und das Full-Solid-Wachs F erfordern Wärmeeinsatz, die das enthaltene Wachs, bzw. die Wachsmischung zum Schmelzen bringen.

Bei herkömmlichen Full-Solid-Wachsen wird der Drop-Stop-Effekt durch das als thixotropes Mittel eingesetzte Wachs bewirkt, das eine gesteuerte Migration bereitstellt. Üblicherweise führt dabei zusätzlich eingebrachte Wärme zum Schmelzen der Wachspartikel, so dass das verflüssigte Wachs auch in Spalte und Engstellen kriechen kann. Beim folgenden Abkühlen verfestigen sich die Wachspartikel wieder und beenden so die Migration unmittelbar. Dazu war bislang eine Wärmeeinwirkung von ca. 60 °C für etwa eine Minute erforderlich.

Bei dem erfindungsgemäßen Korrosionsschutzmittel G ist die Rheologie durch die Zusammensetzung so eingestellt, dass das Korrosionsschutzmittel auch ohne Wärmebeaufschlagung bei Raumtemperatur nach dem Auftrag zunächst noch kriechfähig ist, um in Spalte und Ritzen einzudringen. Nach kurzer Eindringzeit tritt durch den Anstieg der Viskosität infolge der abnehmenden Scherkräfte im Film nach dem Auftrag der Ablaufhemmungseffekt durch die Wachsmischung und Überbasischem Calciumsulfonat, unterstützt durch die Eigenthixotropie des Füllers Calciumsulfat ein.

Wird ein Hohlraum eines Bauteils mit dem erfindungsgemäßen Korrosionsschutzmittel versiegelt, so kann es durch den Ablaufhemmungseffekt nach der Applikation des Schutzfilms relativ schnell weiterverarbeitet werden, ohne dass das Mittel austropft, während die oxidative Aushärtung, bei der es sich um eine chemische Vernetzungsreaktion handelt, in den folgenden drei bis sieben Tagen stattfindet. Ist die Vernetzungsreaktion abgeschlossen, bleibt der Schutzfilm auch bei Temperaturerhöhungen stabil.

## Patentansprüche

1. Korrosionsschutzmittel zur Hohlraumkonservierung, das ohne Erwärmung applizierbar und verfestigbar ist und das keine flüchtigen organischen Verbindungen enthält,
**dadurch gekennzeichnet, dass**
das Korrosionsschutzmittel eine Zusammensetzung aus 25 bis 40 Gew.-% Basisfluid, das aus einer Gruppe ausgewählt ist, die VOC-freie Lösungsmittel, Mineralöle, Ester und Kombinationen davon umfasst,
19 bis 25 Gew.-% Polyesterharz,
7 bis 11 Gew.-% Wachsmischung aus zumindest zwei sich hinsichtlich ihres Erstarrungspunkts unterscheidender fester Paraffine,
12 bis 18 Gew.-% Korrosionsschutzadditiv, das aus einer Gruppe ausgewählt ist, die Alkali- und Erdalkalisulfonate, Salicylate, Wollfette und Kombinationen davon umfasst,
15 bis 25 Gew.-% Füller und
0,4 bis 0,6 Gew.-% zumindest eines Additivs, das aus einer Gruppe ausgewählt ist, die zumindest ein Hautverhinderungsmittel, ein Sikkativ und ein Farbstoffadditiv umfasst,
aufweist.

2. Korrosionsschutzmittel zur Kaltapplikation nach Anspruch 1,
**dadurch gekennzeichnet, dass**
das Korrosionsschutzadditiv Calciumsulfonat ist.

3. Korrosionsschutzmittel nach Anspruch 1 oder 2,
**dadurch gekennzeichnet, dass**
die 25 bis 40 Gew.-% Basisfluid sich aus
- 8 bis 12 Gew.-% eines VOC- und aromatenfreien Lösungsmittels und
- 17 bis 28 Gew.-% eines paraffinischen Mineralöls zusammensetzen, und
die 7 bis 11 Gew.-% Wachsmischung sich aus
- 2 bis 3 Gew.-% eines ersten Wachses mit einem Erstarrungspunkt im Bereich von 60 bis 65 °C,
- 4 bis 6 Gew.-% eines zweiten Wachses mit einem Erstarrungspunkt im Bereich von 35 bis 55 °C, und
- 1 bis 2 Gew.-% eines dritten Wachses mit einem Erstarrungspunkt im Bereich von 76 bis 82 °C
zusammensetzen.

4. Korrosionsschutzmittel nach zumindest einem der Ansprüche 1 bis 3,
**dadurch gekennzeichnet, dass**
die Viskosität des Korrosionsschutzmittels durch den Anteil des Basisfluids an der Zusammensetzung und/oder durch Variation der Anteile des Lösungsmittels und des Mineralöls an dem Basisfluid einstellbar ist.

5. Korrosionsschutzmittel nach zumindest einem der Ansprüche 2 bis 4,
**dadurch gekennzeichnet, dass**
die Zusammensetzung des Korrosionsschutzmittels
9,89 Gew.-% VOC- und aromatenfreies Lösungsmittel,
23,6 Gew.-% paraffinisches Mineralöl,
22,0 Gew.-% Polyesterharz,
2,5 Gew.-% erstes Wachs,
5,0 Gew.-% zweites Wachs,
1,5 Gew.-% drittes Wachs,
15,0 Gew.-% überbasisches Calciumsulfonat,
20,0 Gew.-% Füller,
0,4 Gew.-% Hautverhinderungsmittel,
0,1 Gew.-% Sikkativ und
0,01 Gew.-% Farbstoffadditiv
umfasst.

6. Korrosionsschutzmittel nach zumindest einem der Ansprüche 2 bis 5,
**dadurch gekennzeichnet, dass**
- das VOC- und aromatenfreie Lösungsmittel ein aliphatisches Kohlenwasserstoffgemisch mit einem Siedebeginn bei zumindest 275 °C und einem Siedeende bei maximal 320 °C ist, und/oder
- das paraffinische Mineralöl eine Dichte bei 15 °C im Bereich von 845 bis 865 kgm⁻³ und eine kinematische Viskosität bei 40 °C von 14 bis 17 cSt aufweist, und/oder
- das Polyesterharz ein festkörperreiches, fettes lösungsmittelfreies Alkyd mit einem Fettsäuregehalt von 84 % ist, und/oder
- der Füller ein Calciumsulfat mit einer durchschnittlichen Korngröße von 3 µm ist, und/oder
- das Sikkativ ein metallbasierter Katalysator ist, und/oder
- das Farbstoffadditiv ein UV-Adsorbens, bevorzugt ein hochmolekularer fluoreszierender Weißmacher ist.

7. Korrosionsschutzmittel nach zumindest einem der Ansprüche 1 bis 6,
**dadurch gekennzeichnet, dass**
die Ester des Basisfluids Mono-, Di- und/oder Hydroxyester sind, die alle jeweils voll gesättigt, einfach oder mehrfach ungesättigt sein können.

8. Verwendung eines Korrosionsschutzmittels nach zumindest einem der Ansprüche 1 bis 7 zur Hohlraumkonservierung, wobei das Korrosionsschutzmittel ohne Wärmeeinwirkung mit einer Schichtdicke in einem Bereich von 25 bis 50 µm appliziert wird, und bevorzugt mittels Sprühen appliziert wird.

## Claims

1. A corrosion protection agent for the preservation of hollow spaces, wherein said corrosion protection agent can be applied and hardened without being heated and wherein said corrosion protection agent does not contain any organic compounds,
**characterised in that**
the corrosion protection agent includes a composition that is made up of 25 to 40 per cent by weight of a basic fluid that is selected from a group comprising VOC-free solvents, mineral oils, esters and combinations thereof,
of 19 to 25 per cent by weight of polyester resin,
of 7 to 11 per cent by weight of a wax mixture consisting of at least two solid paraffin waxes that are different from each other with respect to their solidification points,
of 12 to 18 per cent by weight of a corrosion protection additive that is selected from a group comprising alkaline and alkaline earth sulphonates, salicylates, wool greases and combinations thereof,
of 15 to 25 per cent by weight of filling material, and
of 0.4 to 0.6 per cent by weight of at least one additive that is selected from a group comprising at least one antiskinning agent, one liquid drier and one dye additive.

2. The corrosion protection agent for cold application according to Claim 1,
**characterised in that**
the corrosion protection additive is calcium sulphonate.

3. The corrosion protection agent according to Claim 1 or 2,
**characterised in that**
the 25 to 40 per cent by weight of basic fluid are composed of
- 8 to 12 per cent by weight of a VOC- and aromatic-free solvent and
- 17 to 28 per cent by weight of a paraffinic mineral oil, and
the 7 to 11 per cent by weight of the wax mixture are composed of
- 2 to 3 per cent by weight of a first wax having its solidification point within the range from 60 to 65 °C,
- 4 to 6 per cent by weight of a second wax having its solidification point within the range from 35 to 55 °C, and
- 1 to 2 per cent by weight of a third wax having its solidification point within the range from 76 to 82 °C.

4. The corrosion protection agent according to at least any one of Claims 1 to 3,
**characterised in that**
the viscosity of the corrosion protection agent can be adjusted by the content of the basic fluid in the composition and/or by varying the contents of the solvent and the mineral oil in the basic fluid.

5. The corrosion protection agent according to at least any one of Claims 2 to 4,
**characterised in that**
the composition of the corrosion protection agent comprises
9.89 per cent by weight of VOC- and aromatic-free solvent,
23.6 per cent by weight of paraffinic mineral oil,
22.0 per cent by weight of polyester resin,
2.5 per cent by weight of the first wax,
5,0 per cent by weight of the second wax,
1.5 per cent by weight of the third wax,
15.0 per cent by weight of overbased calcium sulphonate,
20.0 per cent by weight of filling material,
0.4 per cent by weight of antiskinning agent,
0.1 per cent by weight of liquid drier, and
0.01 per cent by weight of dye additive.

6. The corrosion protection agent according to at least one of Claims 2 to 5,
**characterised in that**
- the VOC- and aromatic-free solvent is an aliphatic hydrocarbon mixture which starts boiling at at least 275 °C and stops boiling at no more than 320 °C, and/or
- the paraffinic mineral oil has a density within the range from 845 to 865 kgm⁻³ at 15 °C and a kinematic viscosity of 14 to 17 cSt at 40 °C, and/or
- the polyester resin is a solid-rich, fat, solvent-free alkyd having a fatty acid content of 84%, and/or
- the filling material is a calcium sulphate having a mean grain size of 3 µm, and/or
- the liquid drier is a metal-based catalyst, and/or
- the dye additive is a UV adsorbing agent, preferably a high-molecular fluorescent whitening agent.

7. The corrosion protection agent according to at least one of Claims 1 to 6,
**characterised in that**
the esters of the basic fluid are monoesters, diesters and/or hydroxyesters, each of which can all be fully saturated, monounsaturated or polyunsaturated.

8. A use of a corrosion protection agent according to at least one of Claims 1 to 7 for the preservation of hollow spaces, wherein the corrosion protection agent is applied without the action of heat and with a layer thickness within the range from 25 to 50 µm and is, preferably, applied by being sprayed.

## Revendications

1. Agent de protection contre la corrosion pour la conservation d'espace creux qui peut être appliqué et peut être durci sans chauffage, et qui ne contient aucun composé organique volatile,
**caractérisé en ce que**
l'agent de protection contre la corrosion présente une composition constituée de 25 à 40 % en poids de fluide de base qui est sélectionné parmi un groupe qui comprend des solvants exempts de COV, et qui comprend des huiles minérales, des esters et des combinaisons de ceux-ci,
19 à 25 % en poids de résine de polyester,
7 à 11 % en poids de mélange de cires constitué d'au moins deux paraffines solides se différenciant en ce qui concerne leur point de solidification,
12 à 18 % en poids d'additif de protection contre la corrosion qui est sélectionné parmi un groupe qui comprend des sulfonates alcalins et alcalino-terreux, des salicylates, des graisses de laine et des combinaisons de ceux-ci,
15 à 25 % en poids de charge et
0,4 à 0,6 % en poids d'au moins un additif qui est sélectionné parmi un groupe qui comprend au moins un agent antipeau, un siccatif et un additif de colorant.

2. Agent de protection contre la corrosion pour l'application à froid selon la revendication 1,
**caractérisé en ce que**
l'additif de protection contre la corrosion est le sulfonate de calcium.

3. Agent de protection contre la corrosion selon la revendication 1 ou 2,
**caractérisé en ce que**
les 25 à 40 % en poids de fluide de base se composent de
- 8 à 12 % en poids d'un solvant exempt de COV et de composés aromatiques et
- 17 à 28 % en poids d'une huile minérale paraffinique, et
les 7 à 11 % en poids de mélange de cires se composent de
- 2 à 3 % en poids d'une première cire avec un point de solidification dans la région de 60 à 65°C,
- 4 à 6 % en poids d'une deuxième cire avec un point de solidification dans la région de 35 à 55°C, et
- 1 à 2 % en poids d'une troisième cire avec un point de solidification dans la région de 76 à 82°C.

4. Agent de protection contre la corrosion selon au moins une des revendications 1 à 3,
**caractérisé en ce que**
la viscosité de l'agent de protection contre la corrosion peut être réglée par la proportion du fluide de base sur la composition et/ou par variation des proportions du solvant et de l'huile minérale sur le fluide de base.

5. Agent de protection contre la corrosion selon au moins une des revendications 2 à 4,
**caractérisé en ce que**
la composition de l'agent de protection contre la corrosion comprend
9,89 % en poids de solvant exempt de COV et de composés aromatiques,
23,6 % en poids d'huile minérale paraffinique,
22,0 % en poids de résine de polyester,
2,5 % en poids de la première cire,
5,0 % en poids de la deuxième cire,
1,5 % en poids de la troisième cire,
15,0 % en poids de sulfonate de calcium au-dessus des conditions basiques,
20,0 % en poids de charge,
0,4 % en poids d'agent antipeau,
0,1 % en poids de siccatif et
0,01 % en poids d'additif de colorant

6. Agent de protection contre la corrosion selon au moins une des revendications 2 à 5,
**caractérisé en ce que**
- le solvant exempt de COV et de composés aromatiques est un mélange d'hydrocarbures aliphatiques avec un début d'ébullition à au moins 275°C et une fin d'ébullition à 320°C maximum, et/ou
- l'huile minérale paraffinique présente une densité à 15°C dans la région de 845 à 865 kgm⁻³ et une viscosité cinématique à 40°C de 14 à 17 cSt, et/ou
- la résine de polyester est un alkyde riche en solides, exempt de solvant gras avec une teneur en acide gras de 84 %, et/ou
- la charge est un sulfate de calcium avec une granulométrie moyenne de 3 µm, et/ou
- le siccatif est un catalyseur à base de métal, et/ou
- l'additif de colorant est un adsorbant UV, de préférence un agent de blanchiment fluorescent à poids moléculaire élevé.

7. Agent de protection contre la corrosion selon au moins une des revendications 1 à 6,
**caractérisé en ce que**
les esters du fluide de base sont des mono-, di- et/ou hydroxyesters qui peuvent tous à chaque fois être entièrement saturés, mono- ou polyinsaturés.

8. Utilisation d'un agent de protection contre la corrosion selon au moins une des revendications 1 à 7 pour la conservation d'espace creux, dans laquelle l'agent de protection contre la corrosion est appliqué sans action de la chaleur avec une épaisseur de couche dans une région de 25 à 50 µm, et est appliqué de préférence au moyen de pulvérisation.
